# EUROPEAN PATENT APPLICATION

(11) **EP 4 389 389 A1**
(43) Date of publication of application: **26.06.2024**
(21) Application number: 23215675.2
(22) Date of filing: 11.12.2023
(51) Int. Cl.: B29C 45/14, G04C 10/00, G04G 17/04, A44C 5/00, B29K 75/00

(54) **A METHOD OF MANUFACTURING A STRAP FOR A WEARABLE DEVICE**

(30) Priority: 22.12.2022 GB 202219490; 04.04.2023 GB 202305015
(71) Applicant: Armour Surveillance Security Equipment and Technology Ltd, London W1J 6EE (GB)
(72) Inventor: DINAN, Richard, London, W1J 6EE (GB); FAWCETT, Patrick James, London, W1J 6EE (GB)
(74) Representative: HGF

(57) **Abstract**

The present invention relates to a method of manufacturing a strap including, providing a mould for a strap, the strap comprising a first opening, inserting a first component into said mould, arresting said first component with respect to said mould, such that said first component is proximate said first opening, injecting said mould with a wet applied structural component, wherein said first component comprises a first keying feature which increases the surface area of the first component.

## Description

The invention relates to a method of manufacturing a strap for a wearable device.

### BACKGROUND

Portable electronic devices, such as watches and straps with a radio transmitter, require a substantial number of components to be located into a relatively small volume, particularly if the resulting electronic device is to be small enough to be worn on the wrist for everyday use. There are many design limitations for such straps, such as requiring the use of radio transparent materials, being soft enough for comfort, being flexible enough to be accommodated on the wrist, whilst being sturdy enough to protect the delicate electronic components.

A common issue with such watches and straps is that the internal components can be seen deforming and protruding from the strap, such as when the strap is bent. This can cause discomfort for the user and ruin the aesthetic appeal of the strap, as well as destroying any environmental seal provided by the strap. Making the strap out of harder materials could overcome this issue but this necessarily makes the watch less comfortable and decreases flexibility.

### BRIEF SUMMARY

A first aspect of the present invention relates to a method of manufacturing a strap comprising: providing a mould for a strap, the strap comprising a first opening; inserting a first component into said mould; arresting said first component with respect to said mould, such that said first component is proximate said first opening; injecting said mould with a wet applied structural component, wherein said first component comprises a first keying feature which increases the surface area of the first component.

The present method ensures sufficient strength in the adhesion of the first component to the wet applied structural component to withstand strain from normal and excessive use and increases the durability of the strap by providing keying features on the first component which increase the surface area of the first component which is in contact with the wet applied structural component. The first component can be attached to a number of other components both within the strap and attachable to the strap. For example, the first component can be attached to a watch head, buckle or clasp to form a wearable device. The day to day use of the device, including taking it on and off, causes strain between the first component and the wet applied structural component, eventually causing the attachment to degrade and ultimately fail. By providing keying features on the first component, the longevity of the device is increased because the forces acting on the interface between the first component and the wet applied structural component are distributed along a larger area. In addition, the position of said keying features close to the junction of the wet applied structural component and the external face of the first component will decrease the likelihood of the wet applied structural component peeling off at said junction which is where degradation is most likely to begin.

Preferably, said keying features extend along said first component in a direction substantially perpendicular to said first opening.

The effectiveness of the keying features can be increased by applying them in locations and orientations which will most effectively distribute the strain.

Preferably, said first component further comprises an anchor, wherein the anchor comprises a shank extending substantially parallel to said opening terminating in a tethering feature. Said tethering feature comprising at least one of a hook, a return or a fin extending perpendicular to said shank.

Preferably, said anchor comprises anchor keying features.

Preferably, said tethering feature further comprises at least one groove, wherein said groove extends perpendicular to said shank.

Preferably, said keying features further comprise at least one bore extending through said first component.

Preferably, said first component comprises a connector for connecting to a watch head.

Preferably, said strap further comprises a second component which is connected to said first component.

Preferably, said second component comprises a flexible PCB and at least one electronic component.

Preferably, said electronic components comprise at least one of: a battery, a transceiver for transmitting radio signals, a button.

A further aspect of the present invention relates to a strap comprising a a battery, a transceiver for transmitting radio signals, a button made according to the above method.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1A illustrates an aspect of the subject matter in accordance with one embodiment.
FIG. 1B illustrates an aspect of the subject matter in accordance with one embodiment.
FIG. 2 illustrates an aspect of the subject matter in accordance with one embodiment.
FIG. 3 illustrates an aspect of the subject matter in accordance with one embodiment.
FIG. 4 illustrates an aspect of the subject matter in accordance with one embodiment.
FIG. 5 illustrates an aspect of the subject matter in accordance with one embodiment.

### DETAILED DESCRIPTION

Certain terminology is used in the following description for convenience only and is not limiting. The words 'right', 'left', 'lower', 'upper', 'front', 'rear', 'upward', 'down', 'downward', 'above' and 'below' designate directions in the drawings to which reference is made and are with respect to the described component when assembled and mounted (e.g. *in situ*)*.* The words `inner', `inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

Through the description and claims of this specification, the terms 'comprise' and 'contain', and variations thereof, are interpreted to mean `including but not limited to', and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality, as well as, singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

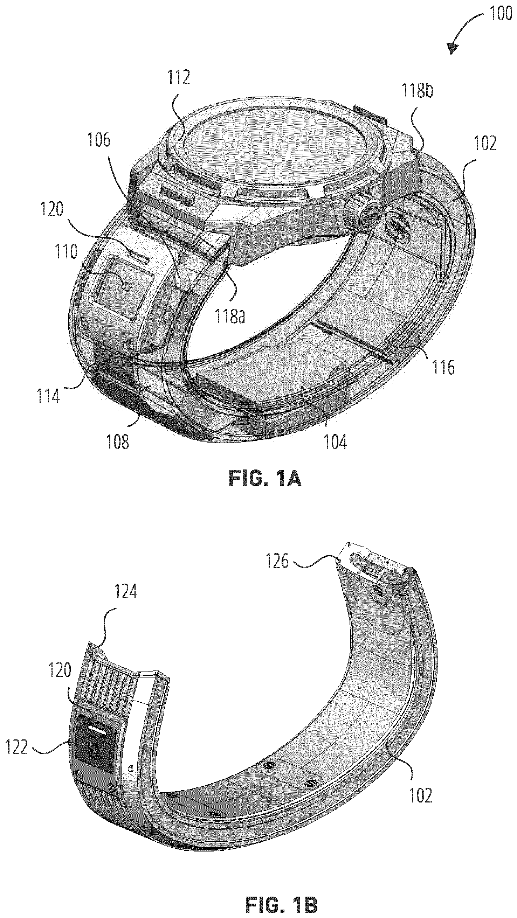

FIG. 1A shows the internal components of a strap 102 according to an embodiment of the present invention. The strap 102 is connectable to a watch housing 112 to provide the functionality of a conventional mechanical watch with apparatus for communicating with a remote security system. Although the present invention may have other applications, the invention will be described with particular reference to examples in which the security system is a remote security system of a vehicle, such as a keyless entry or a Keyless Go^{™} system. The strap may be a strap, or bracelet without a watch or watch housing 112.

The strap 100, includes two ends 118a, 118b, the ends are connected to opposite sides of an optional watch housing 112, which contains a mechanical watch movement. Here mechanical means a watch movement which derives its power from a coiled spring and/or one which derives regulation from an escapement mechanism, rather than, for example, a quartz movement, although other mechanisms may be used instead. The watch housing 112 is made of metal such that it is hard wearing and non-brittle. In some embodiments, the metal may be a precious metal such as gold or platinum. The components of the mechanical watch movement are also made from metal. However, metals, especially precious metals, are generally radio opaque, meaning that communicating with a vehicle via radio antenna within the wearable device housing is not possible, this issue is particularly pronounced when the watch movement is a mechanical watch movement which has all metal parts.

The strap 102 is at least partially flexible and the length variable/settable, such that the wearable device 100 may be worn by users having different sized wrists. In the illustrated embodiment, this is achieved by forming part of each strap from a flexible rubber material. However, the skilled person will understand that other flexible materials could be used in other embodiments.

The strap 102 in the embodiment shown comprises a PCB, including flexible portions 114 and electronic components. In the example shown, the electronic components include first and second batteries 106, 108, the batteries may be coin cells. The electronic components further include a transmitter for transmitting radio signals 104 and a button 110 for activating the electronic components. Each of the electronic components is provided with a cage which has a plurality of uses both during and after manufacture. The transmitter for transmitting radio signals 104 may be a transceiver for receiving and transmitting signals. The transmitter for transmitting radio signals 104 is connected to an antenna 116. Each of the transmitter 104 and the antenna 116 may be configured to either transmit, receive or both transmit and receive signals, such as radio signals. The transmitter and antenna may be configured to receive and transmit signals of different frequencies.

The present invention allows the transmission of signals from the transmitter 104 because the strap 102 is formed from radio transparent materials. For example, the straps may be formed of rubber or polyurethane, and optionally coated with leather or another radio-transparent material.

The transmitter is arranged to transmit radio signals which communicate with a vehicle, allowing a user to passively unlock the vehicle when the watch is within a predetermined range, or actively lock and unlock the vehicle using the button 110. This may be referred to as a keyless entry system. Keyless entry systems typically work by the vehicle intermittently transmitting signals, which are received by a transceiver of the keyless entry system. Upon receipt of the signal from the vehicle, the transceiver produces a signal comprising a code which can be received by the vehicle. If a signal indicating a "correct" code is received by the vehicle, then the doors are automatically unlocked, with no further action from the user being required.

The wearable device 100 is provided with a button 110 attached to the strap 102, which button may be operable to cause a signal to be sent, which signal may cause a vehicle to start if it is sent from within the vehicle. However, it will be understood that the functionality available by pressing the button 110 will depend on the specific vehicle that the wearable device 100 is arranged to unlock and start. In some examples, the button may cause a signal to be sent that operates to unlock the vehicle from a relatively large distance away, in the manner of a conventional remote key.

A particular challenge associated with provision of Keyless Go^{™} and keyless entry functionality is that a relatively large amount of energy and a relatively high peak current is required to run the array of transceivers for these functions. Further, a large amount of energy will also need to be stored for the keyless entry functionality, because for some keyless entry systems the respective transceiver may need to be transmitting constantly (albeit at a very low power level). The present inventors have recognised that the peak current required by a keyless entry circuit may be in the region of 10mA for some keyless entry systems. Accordingly, it is necessary to provide a cell that is able to provide this peak current and store an amount of energy that allows the wearable device to function for a required length of time before the battery needs to be replaced. It is also important for the cell to be relatively compact, as package space within the wearable device is limited. A suitable cell/ battery may be a CR2032 coin cell.

Placing the batteries under the watch housing 112 may make the watch uncomfortably tall for the user. Therefore, the cells 106, 108 are placed in the strap 102. Placing the cells 106, 108 and the transceiver in the strap 102 ensures that the functionality of the strap and watch is maximised, without degrading the comfort and quality of the watch. Due to the volume required within the strap to house and pot each of the electronic components, it is not feasible to include a clasp, which would disengage the components, making it necessary to allow the strap to flex such that it can be removed from the user without damaging the internal components.

FIG. 1B shows a perspective view of the strap 102 with the button 122. The outer portion of the button 122 and LED indicator 120 and first and second sockets 124, 126 are visible from the exterior of the strap, but the other components are hidden within the strap . The watch housing which connects to the two ends of the strap 102 is not shown, in some examples, the ends of the strap or the sockets 124, 126, may connect to the watch head, each other or to a clasp or buckle. In the example shown, the button 122 sits atop one of the battery cells (not shown). The button includes an indicator light, in the form of an LED indicator 120. The battery cell is connected to a second battery which may be attached to a cage (not shown) which is connected to the transmitter for transmitting radio signals 104. The second battery is connected to the transmitter for transmitting radio signals 104 via the flexible PCB, and the transmitter is connected to the antenna 116 via the flexible PCB. In varying examples of the present invention, the electronic components can be arranged in any suitable order.

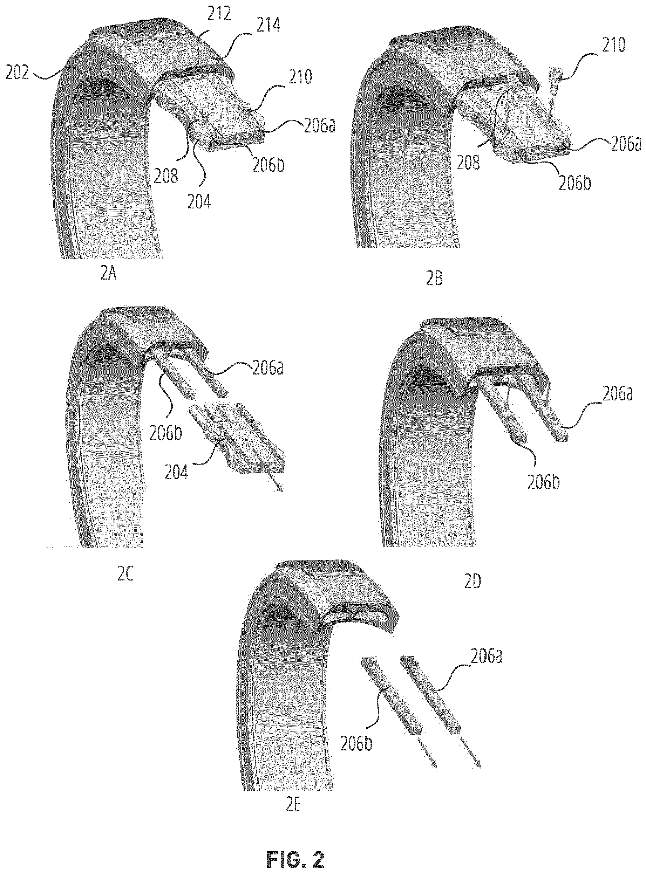

FIG. 2A shows a tool inserted into the strap 202 which may be used to arrest components within the mould prior to the injection of polyurethane. The terms wet applied structure and polyurethane are used interchangeably in the present application. The mould has a void for tool 204, which is a close fit to ensure the socket 214 is accurately and firmly held in position during moulding. In addition, tool 204 is shaped in a way such that it can be inserted and removed from the mould without causing damage to the mould.

The tool comprises a first tool portion 204 which is releasably attached to second tool portions 206a, 206b by first tool screw 208 and second tool screw 210. The second tool portions 206a, 206b engage the interior of the socket, filling the void within and preventing the intrusion of injected polyurethane. The tool 204 may include vent holes or features, to encourage the flow of the wet applied structural component towards the socket 214. The socket 214 may include vent holes 212, which coincide with vents within the mould and attach to a vacuum generator (not shown). The vent holes 212 extend through the socket 214 and into the void within the mould such that the air pressure within the mould can be reduced to encourage the wet applied structural component to fill the whole volume of the mould. Fibres of polyurethane may fill the vents and remain attached to the strap 202 after manufacture, any excess fibres protruding beyond the socket can be removed with no visible trace. The remaining fibres within the vents serve as an additional tether between the socket and the wet applied structural component.

One possible function of the socket 214 is to provide a means for the watch head to latch to. In this strap 202, the latching feature is a series of teeth. When the polyurethane has cured and the mould has been removed, these teeth make it impossible to remove the tool 204, without removable portions 206a and 206b. To make removal of the tool possible, it can be taken apart by removing the first and second tool screws 208, 210 as shown in FIG. 2B. The first tool portion 204 can be decoupled from the second tool portions 206a, 206b and slidingly removed from the strap 202 as shown in FIG. 2C.

The second tool portions 206a, 206b can then be detached from the socket 214 by applying a detaching force as shown in FIG. 2D and subsequently removed from the strap 202 as shown in FIG. 2E.

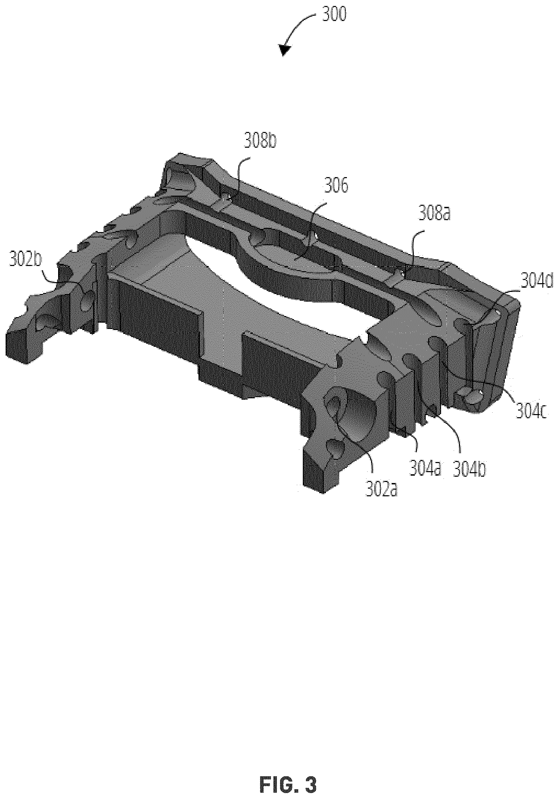

FIG. 3 shows an example of a socket 300 which includes a number of keying features. The first component of the present invention may include some or all of the features of the socket. The socket 300 is constructed to form a pivotable connection with a further component within the strap, connecting at connection points 302a and 302b. The connection points are holes in the socket for accepting a fixing means, such as a screw or rivet and include a notch for accommodating the head of the fixing means such that the head is flush or not protruding from the socket.

The socket 300 further includes a plurality of keying features, including vertical keying features 304a-d and a horizontal keying feature 306. Vertical keying features 304a-d are located on each side of the socket 300. The vertical keying features 304a-d are elongate, generally C-shaped grooves or channels formed in the surface of the socket. In other examples, the vertical keying features 304a-d may be holes, directly through the socket. Further keying features in the socket include horizontal keying feature 306 which extends along a length of the socket, forming a groove or channel.

During manufacture of the strap, the keying features fill with wet applied structural component which is injected into the mould. To aid the complete filling of the mould and the keying features, vent holes 308a, 308b are included in the socket 300. The vent holes align with vents in the mould which connect to a vacuum generator for lowering the air pressure within the mould. By lowering the air pressure within the mould, the injected wet applied structural component is encouraged to fill all of the gaps in the mould and air pockets which could cause blemishes within the final strap are removed.

During use, the ends of the watch strap are gripped by the user in order to latch to the watch head. The wet applied structural component, once cured, has a weak bond to a smooth metal surface. The applied structural component around the socket 300 is regularly gripped and rubbed by the wearer. Furthermore, there is only a thin layer of structural component around the socket 300. The keying elements 304a - 304d help to prevent the structural component being peeled off the socket 300.

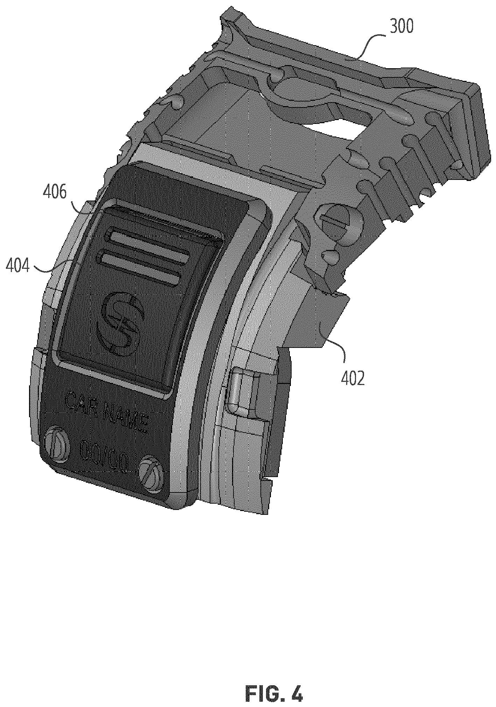

FIG. 4 shows how the socket 300 connects to a further component 402 of the strap, the further component is a chassis for a button and includes a depressible button 404 and an LED indicator 406. When the strap is physically connected to the watch head via the socket 300, it is important that the socket 300 remains strongly fixed to the strap and does not tear out. It is beneficial that the socket has at least one keying feature to increase its engagement with the wet applied structural component. It is beneficial to spread the strain from the socket 300 deeper into the rest of the strap. The socket 300 may be attached to subsequent components, also located within the strap. These components mean that the interface of the socket and the wet applied structural component is tolerant to significant strain and will not fail during normal use. By providing keying features on the surface of the socket, the amount of strain applied to any one location on the socket is decreased improving the longevity and resilience of the strap.

Maintaining flexibility within the strap is important for user comfort and removability. There are large rigid components within the strap, such as coin cells and sockets 300, but between these the strap can be flexible. Pivot 302a allows for flexibility, but also takes the strain from the socket 300 deeper into the strap.

The button chassis 402 includes a depressible button 404, which may have various functions, such as locking and unlocking a door for a vehicle or otherwise, engine ignition, horn or light activation for a vehicle or any other use which is usually associated with a key fob for a vehicle. The button chassis includes an LED indicator 406, which may be used to indicate various information, such as indication of button having been pressed, the distances from the associated vehicle, low battery warnings, lock information about the vehicle, connectivity information, etc.

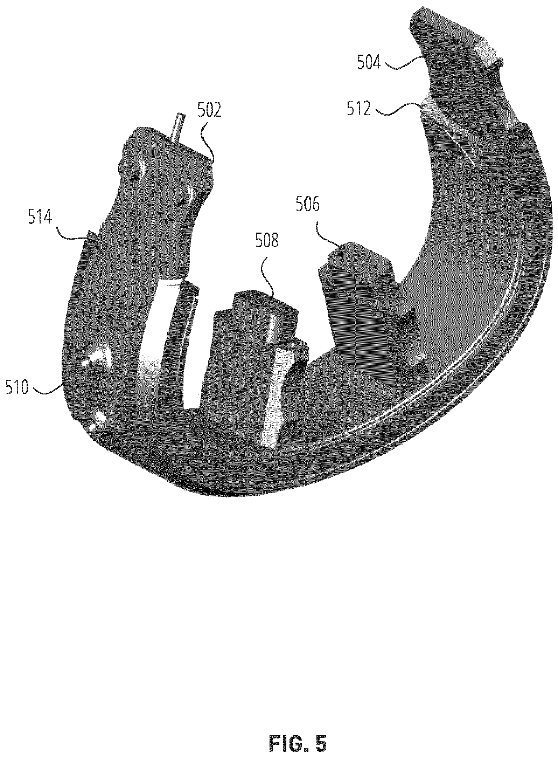

FIG. 5 illustrates the void created within the mould. Such a mould is commonly used form making watch straps in processes such as injection moulding or vacuum casting. For the vacuum casting process, the mould may be generated by 3D printing a unitary master pattern component, positioning the master within a fabrication box and subsequently filling the fabrication box with liquid silicone rubber. When the silicone rubber has hardened, the silicone is cut into two halves and the master removed, such that when the two halves are placed together a void is left in the form of the required shape for the component. The void illustrated includes spaces for tools to hold the parts that are intended to be encapsulated in the wet applied structural component. Void areas 502, 504, 506, 508 and 510 have correspondingly shaped tools, each with a method to hold components such as the socket 300. Subsequently, flow channels can be cut into the mould to provide channels through which wet polyurethane can flow. When the two halves of the mould are connected a substantially air tight mould is formed. Vents can be added as required which connect at specific points on the void which provide a fluid connection to a vacuum generator. After injection and curing of the wet applied structural component, the vents ensure that the wet applied structural component is able to freely flow to all parts of the void, and prevent air bubbles being trapped. If air is trapped anywhere in the void, then the strap will not form to the correct shape, and will have areas missing. Sockets which fill void areas 512, 514 are provided with vent holes which connect to the vents in the mould and tools which fill void areas 506, 508, which are used to hold the components of the strap in position are provided with injection channels. Air can be pumped out of the void via the vent holes in the sockets by a vacuum generator connected to the mould and a wet applied structural component, such as polyurethane can be injected into the injection channels of tools 506, 508. Tools 502, 504 and 510 are used to hold the components in place as well as to create dead space within the void, preventing the wet applied structural component from filling their volume.

## Claims

1. A method of manufacturing a strap comprising:
providing a mould for a strap, the strap comprising a first opening;
inserting a first component into said mould;
arresting said first component with respect to said mould, such that said first component is proximate said first opening;
injecting said mould with a wet applied structural component,
wherein said first component comprises a first keying feature which increases the surface area of the first component.

2. The method of claim 1 wherein said keying features extend along said first component in a direction substantially perpendicular to said first opening.

3. The method of claim 1 or 2 wherein said first component further comprises an anchor, wherein the anchor comprises a shank extending substantially parallel to said opening terminating in a tethering feature comprising at least one of a hook, a return or a fin extending perpendicular to said shank.

4. The method of claim 3 wherein said anchor comprises anchor keying features.

5. The method of any preceding claim wherein said keying features are proximate to the extremities of the wet applied structural component such that when said wet applied structural component is cured, said wet applied structural component is dissuaded from peeling.

6. The method of any of claims 3 to 5 wherein said tethering feature further comprises at least one groove, wherein said groove extends perpendicular to said shank.

7. The method of any one of claims 1 to 6 wherein said keying features further comprise at least one bore extending through said first component.

8. The method of any one of claims 1 to 7 wherein said first component comprises a connector for connecting to a watch head.

9. The method of any one of claims 1 to 8 wherein said strap further comprises a second component which is connected to said first component.

10. The method of claim 9 wherein said second component comprises a flexible PCB and at least one electronic component.

11. The method of claim 10 wherein said electronic components comprise at least one of:
a battery, a transceiver for transmitting radio signals, a button.

12. The method of any preceding claim wherein the first component further comprises at least one vent for connecting the first component to a vacuum generator and wherein said vents are a further tethering feature.

13. A strap comprising a battery, a transceiver for transmitting radio signals, a button made according to any one of claims 1 to 12.
